# EUROPEAN PATENT APPLICATION

(11) **EP 4 026 776 A1**
(43) Date of publication of application: **13.07.2022**
(21) Application number: 22151197.5
(22) Date of filing: 12.01.2022
(51) Int. Cl.: B64F 5/10, B64C 21/10, B05C 1/08, B05C 17/02, B05D 1/28, B05D 5/02, B05C 9/10, B05C 9/14, B05D 3/06, B25J 11/00, B64C 3/00, B64F 5/40

(54) **DEVICE FOR LACQUER TRANSFER**

(30) Priority: 12.01.2021 DE 102021100409
(71) Applicant: Airbus Operations GmbH, 21129 Hamburg (DE)
(72) Inventor: Hoffmeister, Thomas, 21129 Hamburg (DE); Zahlen, Pierre, 21129 Hamburg (DE)
(74) Representative: Bird & Bird LLP

(57) **Abstract**

Described is a device (2) for lacquer transfer, comprising a frame (4), a transfer roller (6) with a circumferential lateral wall (8), and a nozzle (12) for dispensing lacquer, wherein the nozzle (12) is connected to the frame (4),wherein an outside contact surface (18) of the lateral wall (8) comprises several depressions (20), wherein the transfer roller (6) is mounted rotatably about an axis of rotation (22) to the frame (4), wherein the nozzle (12) is arranged for dispensing lacquer into respective depressions (20) while the transfer roller is rotated, wherein the transfer roller (6) is configured to roll with the outside contact surface (18) on a work surface (32) of a work piece (34) for transferring the lacquer from the depressions (20) to the work surface (32), wherein the depressions (20) are formed and distributed over the outside contact surface (18) according to a predefined pattern, wherein the pattern has a main orientation direction (62). The object of the invention, to provide a device by which efficiency of lacquer transfer can be increased, is achieved in that the pattern is arranged such that the main orientation direction (62) extends other than perpendicular to the axis of rotation (22) of the transfer roller (6).

## Description

The invention relates to a device for lacquer transfer to a work surface, in particular to an aerodynamic surface of an aircraft, such as an outer surface of a wing. Further aspects of the present invention relate to a method for producing an aircraft component, as well as to an aircraft or aircraft component producible by such a method.

The device comprises a frame, a transfer roller with a circumferential lateral wall, and a nozzle, preferably in the form of a slit nozzle with a muzzle end, for dispensing lacquer. The nozzle is directly or indirectly connected to the frame. An outside contact surface of the lateral wall comprises several depressions. The transfer roller is mounted rotatably about an axis of rotation at the frame. The nozzle is arranged contactless to or in direct contact with the outside contact surface of the lateral wall for dispensing lacquer into respective depressions in the lateral wall while the transfer roller is rotated about the axis of rotation. The transfer roller is configured to roll with the outside contact surface on a work surface of a work piece for transferring the lacquer from the depressions to the work surface of the work piece.

Further, the depressions are formed and distributed over the outside contact surface according to a predefined pattern, wherein the depressions are preferably in the form of a microstructure. The pattern has a main orientation direction that is intended to be aligned with a longitudinal axis and/or flight direction of an aircraft or aircraft component to which the lacquer is transferred, in order to benefit from the aerodynamic advantages of the depressions.

A similar device for lacquer transfer is known from WO 2015/155 128 A1.

The known devices for lacquer transfer have patterns of depressions in the outside contact surface that have a main orientation direction extending in the direction of movement of the transfer roller over the work surface during lacquer transfer, i.e. in the circumferential direction of the transfer roller and perpendicular to the axis of rotation of the transfer roller. This means, in order to transfer lacquer to an outer surface of an aircraft with the main orientation direction of the pattern in parallel to the longitudinal axis of the aircraft, as required to benefit from the aerodynamic advantages of the depressions, the transfer roller must be rolled over the work surface only in parallel to the longitudinal axis of the aircraft for all kinds of aircraft components. However, some aircraft components, such as the wings, have an essentially greater extension in a direction transverse to the longitudinal axis than in parallel to the longitudinal axis. Lacquer transfer in case of such aircraft components thus cannot be carried out in the direction of the greatest extension of the aircraft component, but rather needs to be carried out in a direction transverse to the greatest extension of the aircraft component. However, deviating considerably from the direction of the greatest extension of the aircraft component decreases efficiency of the lacquer transfer process, since usually a higher number of roller tracks are required to cover the entire component with lacquer, which in turn requires a higher number of repositioning cycles where the device is repositioned to the beginning of a new roller track after a previous roller track is completed. A higher number of roller tracks and repositioning cycles increases time and effort required for the entire lacquer transfer process.

Therefore, an object of the present invention is to provide a device by which efficiency of lacquer transfer can be increased.

This object is achieved by a device comprising the features of claim 1. Specifically, the object is achieved in that the pattern is arranged such that the main orientation direction extends other than perpendicular to the axis of rotation of the transfer roller, i.e. other than in a circumferential direction of the transfer roller, and thus, other than parallel to the direction of movement of the transfer roller over the work surface during lacquer transfer. In such a way, the direction in which the transfer roller is rolled and lacquer is transferred on the work surface of an aircraft component, can be aligned with the direction of the greatest extension of the aircraft component, while the main orientation direction of the pattern of depressions can still be aligned with the longitudinal axis of the aircraft or aircraft component to which lacquer is transferred and with the normal flight direction of the aircraft, respectively.

The device preferably further comprises a hardening unit that might be connected directly or indirectly to the frame and that might be formed as a UV-light unit configured for hardening the lacquer in a contactless way by emitting UV-light. UV-light within the meaning of the present invention is any kind of UV-radiation. The hardening unit might be arranged within an interior space defined by or formed within the transfer roller. The lateral wall of the transfer roller might be transparent for UV-light. The hardening unit might be arranged such that UV-light is emitted towards the work surface upon which the lateral wall of the transfer roller rolls, to harden the lacquer preferably immediately after it being transferred to the work surface.

Preferably, the device or at least its frame is configured to be releasably connected to a handling device, such as a robot with a robot arm. The frame may be configured to be releasably connected to the robot arm. Thus, the device may be a mobile device, in particular a mobile mechanical device.

The frame may form the bases of the device, since the nozzle and the hardening unit are each at least indirectly connected to the frame. For this purpose, the device may comprise further connecting means for connecting the nozzle to the frame and/or further connecting means for connecting the hardening unit to the frame. Thus, the nozzle and the hardening unit may be mounted to the frame. The nozzle may be releasably connected to the frame. Thus, the nozzle may be disconnected form the frame, in particular for a maintenance purpose. The nozzle may be connected to the frame, such that the nozzle can be releasably locked in a working position. If this lock is released, the nozzle may be pivoted via a hinge, which holds the nozzle at the frame. Thus, the nozzle may then be subject to a maintenance procedure.

The transfer roller is mounted rotatably to the frame. The transfer roller can therefore rotate about the axis of rotation. For this purpose, the device may comprise a drive unit, which is configured to drive the transfer roller in a rotation direction of the transfer roller about the axis of rotation. The drive unit may also be at least indirectly connected or mounted to the frame. During use, the drive unit drives the transfer roller, such that the transfer roller rotates about the axis of rotation and roles with the contact surface on a work surface. Furthermore, the device is moved translational in parallel to the work surface, preferably by a robot arm or another handling device, while the transfer roller rotates, such that the transfer roller rolls on the work surface for transferring lacquer.

The nozzle may be connected via a pipe or a tube to a lacquer supply unit, which may be configured to supply the lacquer via the tube or the pipe to the nozzle. The lacquer can be hardened via UV-light. The lacquer supplied to the nozzle may be a liquid medium or a viscous medium.

According a first nozzle arrangement of the nozzle, the muzzle end of the slit nozzle may be arranged contactless to the outside contact surface of the lateral wall for dispensing lacquer into respective depressions.

According to an alternative second nozzle arrangement of the nozzle, the muzzle end of the slit nozzle is arranged in direct contact with the outside contact surface of the lateral wall for dispensing lacquer into respective depressions.

If reference is subsequently made to the nozzle without explicitly specifying the first or second nozzle arrangement, the corresponding explanations may, in principle, apply as preferred embodiments to each of the two arrangements. Therefore, it may be possible to apply the respective explanations to one of the first and second nozzle arrangement or to both nozzle arrangements.

The nozzle is configured for dispensing lacquer into the depressions of the lateral wall of the transfer roller. The nozzle may also be configured for dispensing lacquer onto depression-free sections of the lateral wall of the transfer roller. Thus, the nozzle may be configured for dispensing a lacquer film onto the lateral wall of the transfer roller, wherein the lacquer of the lacquer film fills the depressions and the lacquer film extends in axial direction and partly in circumferential direction of the transfer roller. The lacquer film may therefore theoretically divide into a depression part, which fills the depressions, and a remaining part, which is also referred to as bulk or a bulk part. Therefore, the transfer roller may be configured to roll with the contact surface of the transfer roller on a work surface of a work piece for transferring the lacquer from the contact surface to the work surface of the work piece, such that the lacquer film is transferred to the work surface. This encompassed the transfer of the lacquer from the depressions, but also the transfer of the bulk part. If the transfer of the lacquer from the depressions to the work surface, in particular to a surface of a wing, is described in the following, this shall preferable not exclude the possible transfer of the bulk part to the respective surface and/or the possible transfer of the lacquer from the depressions via the lacquer film.

Resulting from the direct contact between the muzzle end of the slit nozzle and the outside surface of the lateral wall of the transfer roller, preferably if the slit nozzle is in the second nozzle arrangement, a desired fill level of the depressions may be ensured and/or a desired mean thickness of the lacquer film may be ensured. However, a resulting contact force and/or a resulting contact friction should not change as much as possible during a rotation of the transfer roller in order to prevent a slip-stick-effect.

But a desired fill level of the depression may also be ensured and/or a desired mean thickness of the lacquer film on the outside surface of the lateral wall may be ensured, if the muzzle end of the slit nozzle is arranged contactless to the outside contact surface of the lateral wall, in particular, if the nozzle is arranged according to the first nozzle arrangement. A distance formed by the gap between the nozzle and the outside contact surface at the second deformation section may be predefined by an arrangement of the nozzle according to the second nozzle arrangement, such that lacquer dispensed by the nozzle continuously forms the lacquer film on the outside surface of the lateral wall, preferably with a predefined thickness. The dispensed lacquer therefore fills the aforementioned gap with the lacquer. As an effect, lacquer also fills the depressions of the outside contact surface at the second deformation section of the lateral wall. As a further effect, a bulk part may also be applied to the outside contact surface at the second deformation section of the lateral wall.

According to a preferred embodiment, the pattern is formed such that along the main orientation direction the depressions are arranged in a repetitive, preferably periodic, manner and/or have a repetitively, preferably periodically, varying form. Such a repetitively varying arrangement or form of the depressions, which might be e.g. sheds or grooves with repetitively curving side walls, cause advantageous flow conditions in the main orientation direction, specifically minimum drag and maximum efficient flow.

According to an alternative embodiment, the pattern is formed such that along the main orientation direction the depressions have a constant form, i.e. have a constant cross section along the main orientation direction. This means, the depressions are formed as tracks or grooves with straight side walls extending in the main orientation direction. Such constantly formed depressions cause advantageous flow conditions in the main orientation direction, specifically minimum drag and maximum efficient flow.

According to another preferred embodiment, wherein the pattern is formed such that the depressions are formed and arranged as parallel grooves extending in the main orientation direction. Such groove-shaped depressions cause advantageous flow conditions in the main orientation direction, specifically minimum drag and maximum efficient flow.

According to a further embodiment, the pattern is formed such that along the main orientation direction the depressions are formed and arranged in a streamlined manner, in particular streamlined with respect to a fluid streaming in the main orientation direction. Such streamlined depressions cause advantageous flow conditions in the main orientation direction, specifically minimum drag and maximum efficient flow.

According to a further embodiment, the pattern is formed such that along the main orientation direction the depressions are formed and arranged to cause a minimum drag and/or maximum efficient flow, compared to other directions, when the lacquer has been transferred to an aircraft component and the depressions are passed by ambient flow. In such a way, the depressions have an advantageous effect on the associated aircraft component.

According to a further embodiment, the pattern is arranged such that the main orientation direction extends in parallel to the axis of rotation of the transfer roller. In such a way, lacquer might be transferred to aircraft or aircraft components with the transfer roller rolling in a direction perpendicular to the longitudinal axis of the aircraft or aircraft component while the main orientation direction of the pattern is still aligned with the longitudinal axis. This is particularly advantageous for lacquer transfer to aircraft components having a direction of the greatest extension perpendicular to the longitudinal direction, which might be the case e.g. for some wing or tail unit parts, since rolling the transfer roller in the direction of the greatest extension of the aircraft component is usually most effective due to a minimum number of roller tracks required to cover the entire aircraft component and thus a minimum repositioning effort for the device.

According to an alternative embodiment, the pattern is arranged such that the main orientation direction extends angled, i.e. skewed, preferably angled by an angle of between 1° and 89°, relative to both the axis of rotation of the transfer roller and the circumferential direction of the transfer roller. In such a way, lacquer might be transferred to aircraft or aircraft components with the transfer roller rolling in a direction angled to the longitudinal axis of the aircraft or aircraft component while the main orientation direction of the pattern is still aligned with the longitudinal axis. This is particularly advantageous for lacquer transfer to aircraft components having a direction of the greatest extension angled to the longitudinal direction, which might be the case e.g. for some wing or tail unit parts, since rolling the transfer roller in the direction of the greatest extension of the aircraft component is usually most effective due to a minimum number of roller tracks required to cover the entire aircraft component and thus a minimum repositioning effort for the device.

A further aspect of the invention relates to a method for producing an aircraft component, in particular to a method for lacquer transfer to an aircraft component, comprising the following steps: An aircraft component, which may also be an entire aircraft, is provided having a longitudinal axis, preferably in parallel to the flight direction of the associated aircraft during normal flight conditions, and having a work surface at its outer surface, to which lacquer is to be transferred. The outer surface of the aircraft component relates to its aerodynamic surface that is in contact with an ambient flow. Further, a device for lacquer transfer according to any of the embodiments described above is provided. Then, lacquer is transferred to the work surface by moving the device for lacquer transfer such that the transfer roller rolls over the work surface in a direction transverse to the longitudinal axis, preferably perpendicular or skewed with respect to the longitudinal axis, to have the main orientation direction of the pattern of depressions in parallel to the longitudinal axis. The features and effects of the device for lacquer transfer described above apply vis-à-vis also to the method for producing the aircraft component.

According to a preferred embodiment, lacquer is transferred to the work surface by rolling the transfer roller in a direction of the greatest extension of the aircraft component. This relates to a very efficient lacquer transfer process, since a minimum number of roller tracks is required to cover the entire aircraft component, leading to a minimum repositioning effort for the device.

Yet a further aspect of the invention relates to an aircraft or aircraft component having an outer surface coated with structured, in particular microstructured, lacquer, producible or produced with the method according to any of the embodiments described above. The features and effects of the device for lacquer transfer described above as well as the features and effects of the method for producing an aircraft component as described above, apply vis-à-vis also to the aircraft and aircraft component, respectively.

Further features, advantages and application possibilities of the present invention may be derived from the following description of exemplary embodiments and/or the figures. Thereby, all described and/or visually depicted features for themselves and/or in any combination may form an advantageous subject matter and/or features of the present invention independent of their combination in the individual claims or their dependencies. Furthermore, in the figures, same reference signs may indicate same or similar objects.
- Figure 1: schematically illustrates a part of an aircraft wherein a device arranged for transferring lacquer on an upper wing surface.
- Figure 2: schematically illustrates an embodiment of the device in a cross-sectional view with a perspective detailed view of the muzzle end of the slit nozzle.
- Figure 3: schematically illustrates a part of the lateral wall of the transfer roller in a cross-sectional view.
- Figure 4: schematically illustrates a further embodiment of the lateral wall of the transfer roller in a top view.
- Figure 5: schematically illustrates a transfer roller as known in the art having depressions in the outside contact surface formed as circumferential grooves.
- Figure 6: schematically illustrates a transfer roller according to the invention having depressions in the outside contact surface formed as axial grooves.
- Figure 7: schematically illustrates an aircraft component to which lacquer has been transferred by the known roller as shown in Figure 5.
- Figure 8: schematically illustrates an aircraft component to which lacquer has been transferred by the roller according to the invention as shown in Figure 6.

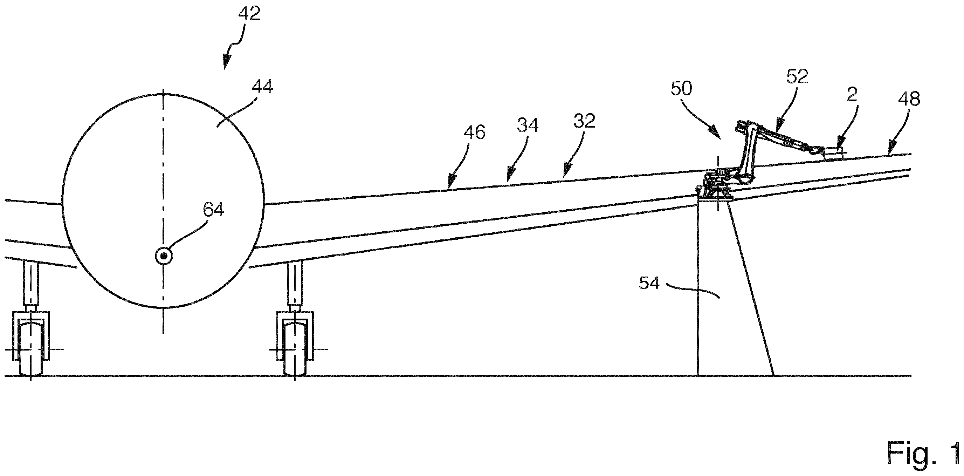

Figure 1 schematically illustrates an aircraft 42, which comprises a fuselage 44 and a wing 46. The air resistance of the aircraft 42 can be reduced, if the upper wing surface 48 of the wing 46 comprises a profile structure. It has been found of advantage, if this profile structure is a microstructure.

Figure 1 also schematically shows a robot 50, which is seated on a rack 54. The robot 50 comprises a movable robot arm 52. A device 2 is mounted at an end of the robot arm 52, such that the device 2 can be moved by the robot 50.

The device 2 is configured for transferring a lacquer onto a work surface 32 of a workpiece 34. According to the example shown in figure 1, the workpiece 34 can be formed by the wing 46 of the aircraft 42. Thus, the upper wing surface 48 can form the work surface 32.

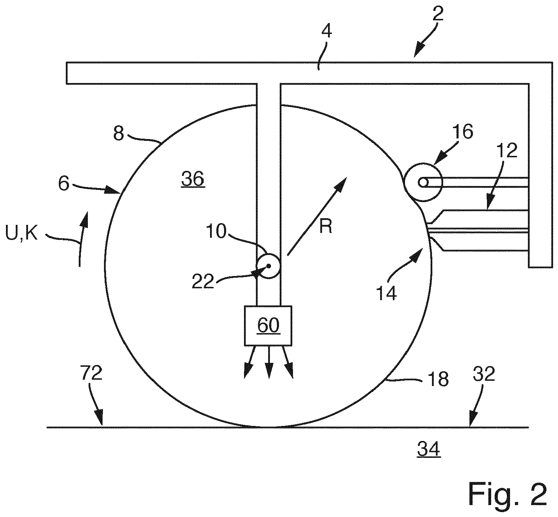

A first embodiment of the device 2 is schematically illustrated in figure 2 in a cross-sectional view. The device 2 comprises a frame 4, a transfer roller 6 with a circumferential lateral wall 8, a drive unit 10, a slit nozzle 12 with a muzzle end 14 for dispensing lacquer, and a deformation unit 16. The transfer roller 6 may also be referred to as a transfer tire. The device 2 can be attached via the frame 4 to the robot arm 52. However, instead of a robot 50 any other handling device may also be used, which is configured to move the device 2 in space. The frame 4 may be adapted to be releasably connected to a handling device, such as the robot 50.

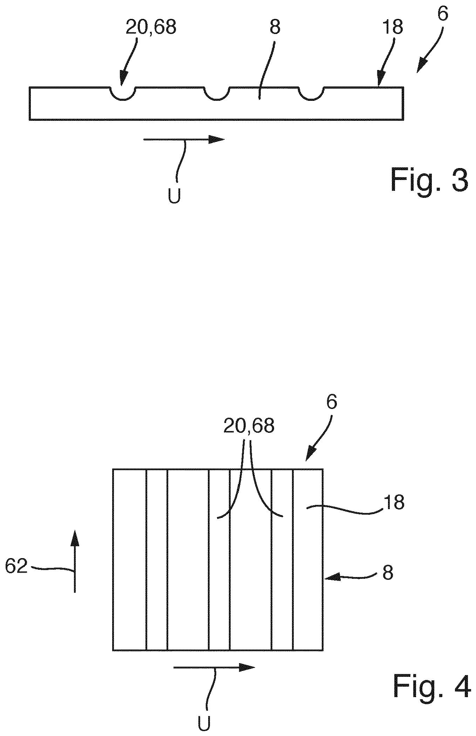

The transfer roller 6 is mounted rotatably, in particular by means of at least one bearing, about an axis of rotation 22 at the frame 4. An outside contact surface 18 of the lateral wall 8 comprises several depressions 20. The depressions 20 may be evenly or stochastically distributed about the circumference of the lateral wall 8. The figures 3 and 4 show a part of the transfer roller 6 in a cross-section view and a top view, respectively.

As schematically indicated in figure 3, the depressions 20 can be formed by recesses arranged at the outside surface 18 of the lateral wall 8 of the transfer roller 6. The depressions 20 can have a predefined size and/or structure. A mean structure size of the depressions 20 can be in the range of 0,1 micrometer to 100 micrometer. In other words, each of the depressions 20 may have a microstructure.

Figure 4 exemplarily shows the depressions 20 of a part of the lateral wall 8 of the transfer roller 6 in a top view. Each of the depressions 20 may comprise an elongated extension, in the present embodiment extending perpendicular to a circumferential direction U of the lateral wall 8 of the transfer roller 6.

Each of the depressions 20 is configured to receive lacquer and to transfer this received lacquer to a work surface 32 of a work piece 34, such as the upper wing surface 48 of a wing 26. Therefore, the several depressions 20 at the outside contact surface 18 of the lateral wall 8 may be arranged and/or formed according to a predefined structure, in particular a microstructure. The lateral wall 8 is preferably made of silicone, such that a damage of the wing surface 48 can be prevented.

If the depressions 20 are filled with a lacquer and if the outside contact surface 18 comes into contact with the work surface 32, in particular the upper wing surface 48, the lacquer previously received in the depressions 20 is transferred to the work surface 32, in particular the upper outside surface 48 of the aircraft 42. This transferred lacquer has a structure, in particular microstructure, corresponding to a structure defined by depressions 20. Thus, the outside contact surface 18 with its depressions 20 is configured for embossing a lacquer-structure, in particular a lacquer-microstructure, on the work surface 32, in particular the upper wing surface 48.

As schematically illustrated in figure 2, the slit nozzle 12 is directly or indirectly connected to the frame 4. Thus, the slit nozzle 12 may be mounted to the frame 4. Furthermore, the deformation unit 16 is directly or indirectly connected to the frame 4. For instance, the deformation unit 16 may be mounted on the frame 4. According to an example not illustrated in figure 2, the slit nozzle 12 and the deformation unit 16 may be formed by an integrated unit. But the slit nozzle 12 may also be directly connected to the deformation unit 16, or vice versa. Thus, the slit nozzle 12 and the deformation unit 16 may be mounted in series to the frame 4.

The device 2 also comprises the drive unit 10. The drive unit 10 is configured to drive the transfer roller 6 in a rotation direction K about the axis of rotation 22.

The lateral wall 8 of the transfer roller 6 is elastically deformable in a radial direction R of the transfer roller 6. The lateral wall 8 of the transfer roller 6 can be made of an elastomer plastic, a silicone or any other elastically deformable plastic material. Preferably, the lateral wall 8 of the transfer roller 6 is made of a synthetic, elastically deformable silicone. As a result, the lateral wall 8 can be at least section-wise deformed in positive or negative radial direction R. The deformation unit 16 is configured to deform the lateral wall 8 in the radial direction R of the transfer roller 6 upstream from the slit nozzle 12 to provide a stable distance of the lateral wall 8 to the muzzle end 14 of the slit nozzle 12 for a defined application of lacquer to the outside contact surface 18 of the lateral wall 8. If references made to the radial direction R, this may refer to the positive radial direction R or an opposite negative radial direction.

The device 2 further comprises a hardening unit 60. The hardening unit 60 is configured for hardening the lacquer in a contactless way. The hardening unit 60 is formed by an UV-light unit. The hardening unit 60 is directly or indirectly connected to the frame 4. Moreover, the hardening unit 60 is arranged within the interior space 36 formed by the transfer roller 6. The lateral wall 8 of the transfer roller 6 is configured to transmit UV-light-waves. Thus, the lateral wall 8 is transparent for UV-light. The hardening unit 60 is arranged, such that UV-light is emitted towards the work surface 32 upon which the lateral wall 8 of the transfer roller 6 rolls.

The lacquer is hardenable via UV-light. Therefore, the device is configured to control the drive unit 10 and/or the hardening unit 60 such that lacquer transferred to the work surface 32 is immediately hardened via UV-light emitted by the hardening unit 60.

As shown in Figs. 3 and 4, the depressions 20 are formed and distributed over the outside contact surface 18 according to a predefined pattern. The pattern has a main orientation direction 62 that is intended to be aligned with a longitudinal axis 64 and flight direction of the aircraft 42 or aircraft component 66 to which the lacquer is transferred, in order to benefit from the aerodynamic advantages of the depressions 20. In the embodiment shown in Fig. 3 and 4, the pattern is formed such that the depressions 20 are formed and arranged as parallel grooves 68 extending in the main orientation direction 62 and having cross sections that are constant along the main orientation direction 62. In such a way, the pattern is formed such that along the main orientation direction 62 the depressions 20 are formed and arranged in a streamlined manner with respect to a fluid streaming in the main orientation direction 62, and are formed and arranged to cause a minimum drag and a maximum efficient flow, compared to other directions, when the lacquer has been transferred to an aircraft component 66 and the depressions are passed by ambient flow.

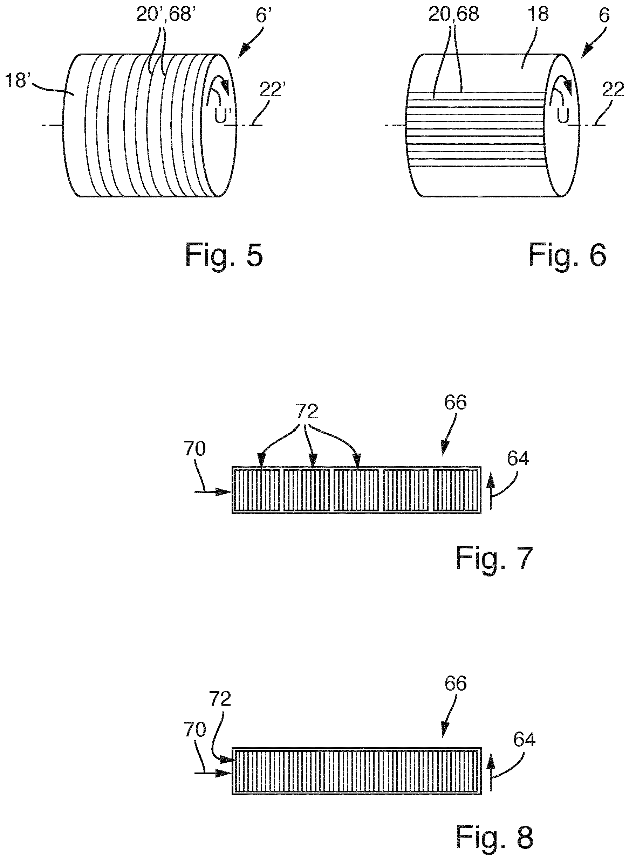

Fig. 5 shows a transfer roller 6' known in the art and Fig. 6 shows a transfer roller 6 according to the invention. While the known transfer roller 6' shown in Fig. 5 has a pattern of depressions 20' formed by grooves 68' with a main orientation direction 62' in parallel to the circumferential direction U', the transfer roller 6 according to the invention, as shown in Fig. 6, has a pattern of groove-shaped depressions 20 arranged such that the main orientation direction 62 extends perpendicular to the circumferential direction U and, thus, in parallel to the axis of rotation 22 of the transfer roller 6.

In such a way, lacquer might be transferred to aircraft 42 or aircraft component 66 with the transfer roller 6 rolling in a direction perpendicular to the longitudinal axis 64 of the aircraft 42 or aircraft component 66 while the main orientation direction 62 of the pattern is still aligned with the longitudinal axis 64. This is particularly advantageous for lacquer transfer to aircraft components 66 having a direction of the greatest extension 70 perpendicular to the longitudinal direction 64, as shown for example in Fig. 8, since rolling the transfer roller 6 in the direction of the greatest extension 70 of the aircraft component 66 is usually most effective due to a minimum number of roller tracks 72 required to cover the entire aircraft component 66 and thus a minimum repositioning effort for the device 2.

This is illustrated in Figs. 7 and 8, where in Fig. 7 an aircraft component 66 is shown to which lacquer has been transferred by the transfer roller 6' shown in Fig. 5, and where in Fig. 8 an aircraft component 66 with the same dimensions as the one from Fig. 7 is shown, to which lacquer has been transferred by the transfer roller 6 shown in Fig. 6. While in Fig. 7 five roller tracks 72 are required to cover the entire aircraft component 66 with lacquer, in Fig. 8 only one roller track 72 is required to cover the entire aircraft component 66 with lacquer. This greatly reduces repositioning effort and increases efficiency of the process.

The aircraft component 66 shown in Fig. 8 might be produced by the device 2 for lacquer transfer as described above having the transfer roller 6 shown in Fig. 6, by the following steps: The aircraft component 66 is provided having the longitudinal axis 64, which is intended to be in parallel to the flight direction of the associated aircraft 42, and having a work surface 32 at its outer surface, to which lacquer is to be transferred. The device 2 for lacquer transfer as described above is provided and lacquer is transferred to the work surface 32 by moving the device 2 such that the transfer roller 6 rolls over the work surface 32 in a direction perpendicular to the longitudinal axis 64 to have the main orientation direction 62 of the pattern of depressions 20 in parallel to the longitudinal axis 64. At the same time, the transfer roller 6 is rolled in the direction of the greatest extension 70 of the aircraft component 66, which provides that only one roller track 72 is required to cover the aircraft component 66 with lacquer.

By the device 2 for lacquer transferred according to the invention, as described above, the direction in which the transfer roller 6 is rolled and lacquer is transferred on the work surface 32 of an aircraft component 66, can be aligned with the direction of the greatest extension 70 of the aircraft component 66, while the main orientation direction 62 of the pattern of depressions 20 can still be aligned with the longitudinal axis 64 of the aircraft 42 or aircraft component 66 to which lacquer is transferred and with the normal flight direction of the aircraft 42, respectively.

It is additionally pointed out that "comprising" does not rule out other elements, and "a" or "an" does not rule out a multiplicity. It is also pointed out that features that have been described with reference to one of the above exemplary embodiments may also be disclosed as in combination with other features of other exemplary embodiments described above. Reference signs in the claims are not to be regarded as restrictive.

## Claims

1. A device (2) for lacquer transfer, comprising
a frame (4),
a transfer roller (6) with a circumferential lateral wall (8), and
a nozzle (12) for dispensing lacquer,
wherein the nozzle (12) is connected to the frame (4),
wherein an outside contact surface (18) of the lateral wall (8) comprises several depressions (20),
wherein the transfer roller (6) is mounted rotatably about an axis of rotation (22) to the frame (4),
wherein the nozzle (12) is arranged contactless to or in direct contact with the outside contact surface (18) of the lateral wall (8) for dispensing lacquer into respective depressions (20) in the lateral wall (8) while the transfer roller is rotated about the axis of rotation (22),
wherein the transfer roller (6) is configured to roll with the outside contact surface (18) on a work surface (32) of a work piece (34) for transferring the lacquer from the depressions (20) to the work surface (32) of the work piece (34),
wherein the depressions (20) are formed and distributed over the outside contact surface (18) according to a predefined pattern,
wherein the pattern has a main orientation direction (62),
**characterized in that**
the pattern is arranged such that the main orientation direction (62) extends other than perpendicular to the axis of rotation (22) of the transfer roller (6).

2. The device according to claim 1, wherein the pattern is formed such that along the main orientation direction (62) the depressions (20) are arranged in a repetitive manner or have a repetitively varying form.

3. The device according to claim 1, wherein the pattern is formed such that along the main orientation direction (62) the depressions (20) have a constant form.

4. The device according to any of claims 1 to 3, wherein the pattern is formed such that the depressions (20) are formed and arranged as grooves (68) extending in the main orientation direction (62).

5. The device according to any of claims 1 to 4, wherein the pattern is formed such that along the main orientation direction (62) the depressions (20) are formed and arranged in a streamlined manner.

6. The device according to any of claims 1 to 5, wherein the pattern is formed such that along the main orientation direction (62) the depressions (20) are formed and arranged to cause a minimum drag and/or maximum efficient flow when the lacquer has been transferred to an aircraft component (66).

7. The device according to any of claims 1 to 6, wherein the pattern is arranged such that the main orientation direction (62) extends in parallel to the axis of rotation (22) of the transfer roller (6).

8. The device according to any of claims 1 to 6, wherein the pattern is arranged such that the main orientation direction (62) extends angled relative to both the axis of rotation (22) of the transfer roller (6) and the circumferential direction (U) of the transfer roller (6).

9. A method for producing an aircraft component (66), comprising the following steps:
- providing an aircraft component (66) having a longitudinal axis (64) and a work surface (32) at its outer surface, to which lacquer is to be transferred,
- providing a device (2) for lacquer transfer according to any of claims 1 to 8,
- transferring lacquer to the work surface (32) by moving the device (2) for lacquer transfer such that the transfer roller (6) rolls over the work surface (32) in a direction transverse to the longitudinal axis (64).

10. The method according to claim 9, wherein lacquer is transferred to the work surface (32) by rolling the transfer roller (6) in a direction of the greatest extension (70) of the aircraft component (66).

11. An aircraft (42) or aircraft component (66) having an outer surface coated with structured lacquer, producible with the method according to claim 9 or 10.
